# EUROPÄISCHE PATENTSCHRIFT

(11) **EP 2 963 779 B1**
(45) Veröffentlichungstag und Bekanntmachung des Hinweises auf die Patenterteilung: **07.03.2018**
(21) Anmeldenummer: 15174202.0
(22) Anmeldetag: 29.06.2015
(51) Int. Cl.: H02K 5/04, H02K 5/18, H02K 5/10, H02K 7/06, H02K 9/22, H02K 11/00, H02K 11/33

(54) **MECHATRONISCHE ANTRIEBSVORRICHTUNG**
MECHATRONIC DRIVE DEVICE
DISPOSITIF D'ENTRAINEMENT MECATRONIQUE

(30) Priorität: 03.07.2014 DE 102014109322
(43) Veröffentlichungstag der Anmeldung: 06.01.2016
(73) Patentinhaber: Dr. Fritz Faulhaber GmbH & Co. KG, 71101 Schönaich (DE)
(72) Erfinder: Winterer Mario, 70771 Leinfelden-Echterdingen (DE)
(74) Vertreter: Patent- und Rechtsanwälte Dr. Solf & Zapf

(56) Entgegenhaltungen:
- EP-A1- 0 048 213
- DE-A1-102008 019 582
- DE-A1-102011 082 461
- JP-A- 2011 078 244
- US-B1- 6 437 469

## Beschreibung

Die vorliegende Erfindung betrifft eine mechatronische Antriebsvorrichtung umfassend ein Gehäuse und ein in dem Gehäuse angeordnetes Antriebsteil, wobei das Antriebsteil im Gehäuse umfangsgemäß durch gegenseitige Anlage kraftschlüssig gehalten ist.

Eine derartige Antriebsvorrichtung ist aus der DE 10 2011 082 461 bekannt. Hierbei besitzt das Gehäuse einen zylinderförmigen Innenraum zur Aufnahme des Statorteils, wobei das Statorteil voll umfänglich umschlossen ist. Das Gehäuse weist mindestens einen in Umfangsrichtung des Innenraumes elastisch ausdehnbaren Dehnungsbereich auf, der einstückig in das Gehäuse integriert ist. Der zylinderförmige Innenraum ist somit vollständig umfangsgemäß geschlossen. Das Statorteil wird zur Montage in den zylinderförmigen Innenraum axial eingeschoben, wobei der Dehnungsbereich elastisch aufgeweitet wird und sich nach Beendigung der Montage federnd zurückverformt, so dass das Statorteil kraftschlüssig im Gehäuse fixiert wird. Nachteilig an dieser Antriebsvorrichtung ist, dass das axiale Einschieben, da hierbei gleichzeitig eine Aufweitung des zylinderförmigen Innenraumes erfolgen muss, problematisch sein kann, weil eine exakte Positionierung des Statorteils in Bezug auf das Gehäuse erfolgen muss, um ein Verhaken oder dergleichen zu vermeiden. EP-A-0048213 offenbart eine Mechatronische Antriebsvorrichtung nach dem Oberbegriff des Anspruchs 1. Der vorliegenden Erfindung liegt die Aufgabe zu Grunde, eine mechanische Antriebsvorrichtung der gattungsgemäßen Art derart zu verbessern, dass eine kostengünstige modulare Bauweise gegeben ist, sowie die Montage des Antriebsteils bzw. eines elektrischen Motors im Gehäuse auf einfache Weise möglich ist.

Erfindungsgemäß wird diese Aufgabe dadurch gelöst, dass das Gehäuse aus einem Gehäusebasisteil mit einem Bodenabschnitt und zwei mit diesen jeweils an dessen Längsrändern angeformten, einander gegenüberliegenden Seitenwandabschnitten und einer von den Seitenwandabschnitten endseitig gebildeten Gehäuseöffnung gebildet wird, wobei die Gehäuseöffnung mittels eines Gehäusedeckels verschlossen ist, der im aufgesetzten Zustand mit den Seitenwandabschnitten kraftformschlüssig verbunden ist, wobei durch eine aufeinander zu gerichtete Verbiegung der Seitenwandabschnitte der Kraftschluss zwischen dem Antriebsteil und dem Gehäuse vorhanden ist.

Hierbei ist es vorteilhaft, wenn das Gehäusebasisteil im Querschnitt zu seiner Gehäuselängsachse gesehen U-förmig ausgebildet ist, und die Seitenwandabschnitte gleich hoch sind. Da erfindungsgemäß der Kraftschluss zwischen dem Antriebsteil und dem Gehäuse im Bereich der Seitenwandabschnitte durch das Aufsetzen des Gehäusedeckels erfolgt, kann das Antriebsteil auf einfache Weise axial in das Gehäusebasisteil eingeführt werden, ohne dass hierbei eine bestimmte korrekte Ausrichtung erfolgen muss. Durch das Aufsetzen des Gehäusedeckels erfolgt dann die endgültige Lagefixierung und die kraftformschlüssige Verbindung mit den Seitenwandabschnitten des Gehäuses. Zweckmäßigerweise ist das Antriebsteil kreiszylindrisch ausgebildet. Weiterhin ist es von Vorteil, wenn der Gehäusedeckel an seinen Längsrändern in Richtung auf den Bodenabschnitt abstehende Raststege mit endseitigen Rastnocken aufweist, die im aufgesteckten Zustand des Gehäusedeckels in an den Seitenwandabschnitten an ihren freien Enden ausgebildeten Rastnuten kraftformschlüssig einrasten. Hierdurch ergibt sich eine einfache und sichere Verbindung des Gehäusedeckels mit dem Gehäusebasisteil, wobei auch die Lösbarkeit des Gehäusedeckels ohne Weiteres gegeben ist. Erfindungsgemäß ist es vorteilhaft, wenn der lichte Abstand der Seitenwandabschnitte im nicht aufgesteckten Zustand des Gehäusedeckels größer ist als der lichte Abstand nach dem Aufstecken des Gehäusedeckels und größer als die Außenabmessungen z. B. der Durchmesser des Antriebsteils. Somit ist nach der Vormontage ein ausreichendes Montagespiel zwischen dem Antriebsteil und den Seitenwandabschnitten vorhanden, wodurch eine problemlose Vormontage erfolgen kann. Durch das Aufsetzen des Gehäusedeckels wird dieses Montagespiel dann durch die Verbiegung der Seitenwandabschnitte ausgeglichen, so dass der Kraftschluss zwischen den Seitenwandabschnitten und dem Antriebsteil gegeben ist.

Erfindungsgemäß ist es von Vorteil, wenn an den Seitenwandabschnitten Anlageflächen für das Antriebsteil ausgebildet sind, die eine der Außenkontur des Antriebsteils angepasste Innenkontur aufweisen sowie die Anlageflächen insbesondere diametral einander gegenüberliegen und eine derartige Bogenlänge besitzen, dass das Antriebsteil über einen Umschließungswinkel größer 180° umschlossen ist. Hierdurch wird ermöglicht, dass nach der axialen Vormontage des Antriebsteils innerhalb des Gehäusebasisteils das Antriebsteil im Gehäusebasisteil gehalten wird, so dass für das Aufstecken des Gehäusedeckels eine zusätzliche Fixierung des Antriebsteils während des Aufsteckvorgangs nicht erforderlich ist.

Weiterhin ist es von Vorteil, wenn auf dem Bodenabschnitt des Gehäusebasisteils eine zusätzliche Anlagefläche für das Antriebsteil vorhanden ist. Erfindungsgemäß ist es weiterhin von Vorteil, wenn die Anlageflächen an den Seitenwandabschnitten und dem Bodenabschnitt derart in Bezug auf das Antriebsteil ausgebildet sind, dass die Anlageflächen der Seitenwandabschnitte und des Bodenabschnitts im aufgesteckten Zustand des Gehäusedeckels mit dem Antriebsteil in Gehäuselängsrichtung gesehen eine linienförmige Anlage besitzen. Somit ist erfindungsgemäß keine vollflächige Anlage des Antriebsteils an den Anlageflächen erforderlich. Hierbei kann es vorteilhaft sein, wenn im Querschnitt zur Gehäuselängsachse gesehen eine Vierpunkt-Anlage zwischen den Anlageflächen der Seitenwandabschnitte aus zwei einander gegenüberliegenden Anlagepunkten an jedem Seitenwandabschnitt oder eine Dreipunkt-Anlage mit jeweils einem Anlagepunkt an den Seitenwandabschnitten und einem Anlagepunkt am Bodenabschnitt vorgesehen ist.

Durch im Bereich der Seitenwandabschnitte ausgebildete Hinterschneidungen wird die Dicke der Seitenwandabschnitte derart verringert, dass sich eine Elastizität der Seitenwandabschnitte einstellt, die eine Verbiegung beim Aufstecken des Gehäusedeckels ermöglicht, gleichzeitig aber beim Lösen des Gehäusedeckels auch eine Rückfederung aus der Anlagestellung erfolgen kann.

Weiterhin ist es erfindungsgemäß vorteilhaft, wenn im Bereich der freien Enden der Seitenwandabschnitte an deren Innenseiten jeweils einander gegenüberliegend in Richtung der Gehäuselängsachse verlaufende Aufnahmenuten ausgebildet sind, in die mindestens eine Leiterplatte eingeschoben ist. Es können auch mehrere derartige Nuten übereinander vorgesehen sein. Hierbei ist eine Abstimmung der Aufnahmenuten und der Leiterplatte derart gegeben, dass im nicht aufgesteckten Zustand des Gehäusedeckels die Leiterplatte leicht in die Aufnahmenuten eingeschoben werden kann und nach dem Aufstecken des Gehäusedeckels die Leiterplatte fixiert ist. Vorteilhafterweise ist auf der Leiterplatte auf ihrer dem Gehäusedeckel zugekehrten Seite mindestens ein Halbleiterbaustein angeordnet, wobei im aufgesteckten Zustand des Gehäusedeckels dieser mit seiner der Leiterplatte zugekehrten Unterseite an dem Halbleiterbaustein derart anliegt, dass eine Wärmeübertragung zwischen dem Halbleiterbaustein und dem Gehäusedeckel erfolgen kann, wodurch eine verbesserte Kühlwirkung erreicht wird. Eine derartige Kühlwirkung kann auch dadurch verbessert werden, dass der Gehäusedeckel und/oder der Bodenabschnitt jeweils auf ihrer Außenseite Kühlrippen besitzen. Weiterhin ist es von Vorteil, wenn auf der dem Gehäusedeckel zugekehrten Seite des Halbleiterbausteins elastische, wärmeleitende Ausgleichmittel angeordnet sind. Diese Ausgleichmittel ermöglichen einen Toleranzausgleich und zudem eine verbesserte Wärmeübertragung von dem Halbleiterbaustein auf den Gehäusedeckel.

Weiterhin kann es erfindungsgemäß von Vorteil sein, wenn das Gehäuse an mindestens einer seiner Stirnseiten mittels eines Abschlussdeckels verschlossen ist, wobei der Gehäusedeckel und der Abschlussdeckel vorteilhafterweise mit Dichtungselementen gegen das Gehäuse abgedichtet sind. Im mit dem Gehäuse verbundenen Zustand der vorzugsweise beidseitig angeordneten Abschlussdeckel ergibt sich eine mechanische stabile Gehäuseeinheit, die zudem auf Grund der optional vorgesehenen Dichtungselemente auch gegen das Eindringen von Feuchtigkeit gesichert ist. Hierbei liegt es ebenfalls im Rahmen der Erfindung, wenn in einem oder in beiden Abschlussdeckeln Bestandteile des erfindungsgemäßen Antriebsteils nach außen herausgeführt sind, wobei es sich z. B. um eine Antriebswelle eines Rotorteils und/oder um Anschlussstecker handeln kann, wobei diese Anschlussstecker im Innern des Gehäuses vorteilhafterweise an Leiterplatten befestigt sind, die senkrecht zur axial verlaufenden Leiterplatte angeordnet sind.

Die erfindungsgemäße mechatronische Antriebsvorrichtung kann als Antriebsteil z. B. einen elektrischen Motor aufweisen. Mit dem Antriebsteil können noch weitere mechatronische Bauteile, wie beispielsweise ein Getriebe oder dergleichen verbunden sein. In einem derartigen Fall kann es zweckmäßig sein, wenn ein Teil des mit dem Motor verbundenen mechatronischen Teils aus dem Abschlussdeckel nach außen geführt ist. Je nach Baulänge des Antriebsteils kann auch dieses teilweise durch einen der Abschlussdeckel nach außen verlaufen.

Vorteilhafte Ausführungen der Erfindung sind in den Unteransprüchen enthalten. Die Erfindung wird anhand der beiliegenden Zeichnungen näher erläutert. Es zeigen:
- Fig. 1: eine Stirnansicht einer erfindungsgemäßen mechatronischen Antriebsvorrichtung mit aufgestecktem Gehäusedeckel,
- Fig. 2: eine Stirnansicht gemäß Fig. 1, jedoch mit nicht aufgestecktem Gehäusedeckel,
- Fig. 3: eine Stirnansicht eines erfindungsgemäßen Gehäuses der Antriebsvorrichtung gemäß Fig. 1, jedoch ohne montiertes Antriebsteil, mit aufgestecktem Gehäusedeckel,
- Fig. 3a, 3b: Ansichten gemäß Fig. 3 zur Darstellung einer Vierpunkt- oder Dreipunkt-Anlage,

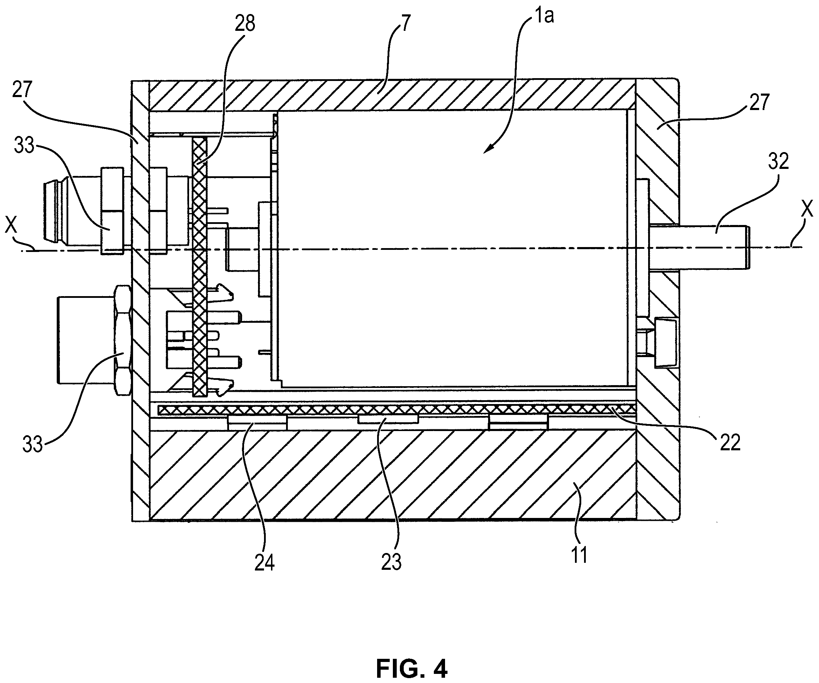

- Fig. 4: einen Längsschnitt durch eine erfindungsgemäße Antriebsvorrichtung im zusammengebauten Zustand,
- Fig. 5: eine Explosionsansicht einer erfindungsgemäßen mechatronischen Antriebsvorrichtung vor dem Zusammenbau,
- Fig. 6: eine perspektivische Ansicht einer weiteren Ausführungsform einer erfindungsgemäßen Antriebsvorrichtung.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale der beschriebenen Merkmalskombinationen beschränkt ist. Vielmehr ist jedes einzelne Merkmal jedes Ausführungsbeispiels auch unabhängig von den anderen im Zusammenhang damit beschriebenen einzelnen Merkmalen für sich und auch in Kombination mit einem oder mehreren der Merkmale eines anderen Ausführungsbeispiels Gegenstand der Erfindung.

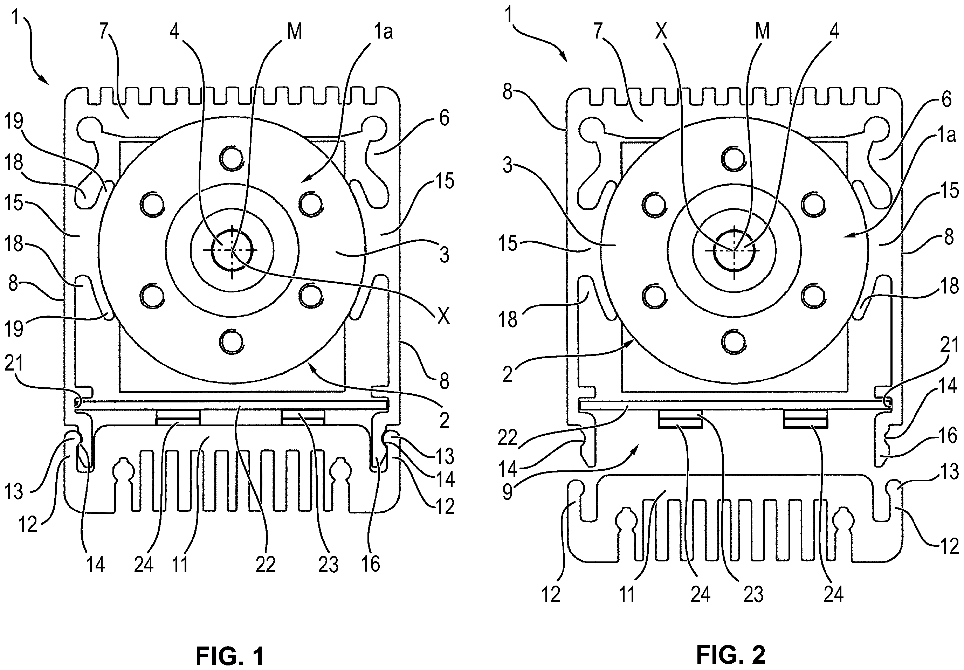

Wie in Fig. 1 beispielsweise dargestellt, umfasst eine erfindungsgemäße mechatronische Antriebsvorrichtung ein Gehäuse 1 und ein in dem Gehäuse 1 angeordnetes elektrisches Antriebsteil 1a, das z. B. ein elektrischer Motor 2 sein kann. Dieser elektrische Motor 2 umfasst z. B. ein Statorteil 3 und ein im Statorteil 3 drehbar gelagertes Rotorteil 4. Das Antriebsteil 1a kann z. B. auch ein Linearmotor sein.

Vorzugsweise umfasst das Gehäuse 1 ein Gehäusebasisteil 6 mit einem Bodenabschnitt 7 und zwei mit diesem jeweils an dessen Längsrändern angeformte, einander gegenüberliegende Seitenwandabschnitte 8. Von den Seitenwandabschnitten 8 wird an deren freien Enden eine Gehäuseöffnung 9 gebildet, wobei die Gehäuseöffnung 9 mittels eines Gehäusedeckels 11 verschlossen bzw. verschließbar ist.

Vorteilhafterweise besitzt das Gehäusebasisteil 6, wie in Fig. 1 dargestellt, ein im Querschnitt zu seiner Gehäuselängsachse X-X gesehen U-förmig ausgebildetes Profil, und die Seitenwandabschnitte 8 sind insbesondere gleich hoch ausgeführt. Erfindungsgemäß ist es ebenfalls möglich, wenn das Gehäusebasisteil 6 im Querschnitt zu seiner Längsachse X-X als Polygon, insbesondere als gleichseitiges Polygon, ausgebildet ist.

In Fig. 1 ist dargestellt, dass das Antriebsteil 1a kreiszylindrisch ausgebildet ist. Erfindungsgemäß ist es aber ebenfalls möglich, wenn das Antriebsteil 1a an seinem Umfang beispielsweise als Polygon, insbesondere als gleichseitiges Polygon, vorzugsweise als Rechteck oder Quadrat geformt ist.

Der Gehäusedeckel 11 ist im aufgesetzten Zustand mit den Seitenwandabschnitten 8 kraftformschlüssig verbunden. Das heißt, der Gehäusedeckel 11 ist lösbar mit dem Gehäusebasisteil 6 verbunden und kann auf die freien Enden der Seitenwandabschnitte 8 rastend aufgesteckt werden und sitzt in diesem Zustand klemmend auf den Seitenwandabschnitten 8, wobei ebenfalls ein Formschluss gegeben ist. Vorzugsweise besitzt der Gehäusedeckel 11 an seinen Längsrändern in Richtung auf den Bodenabschnitt 7 abstehende Raststege 12 mit endseitigen Rastnocken 13. Die Rastnocken 13 rasten im aufgesteckten Zustand des Gehäusedeckels 11 in an den Seitenwandabschnitten 8 an ihren freien Enden ausgebildeten Rastnuten 14. Die Rastnuten 14 sind vorzugsweise in L-förmigen Stegansätzen 16 der Seitenwandabschnitte 8 ausgebildet, wobei in dem längeren L-Schenkel der Stegansätze 16, der parallel zu den Raststegen 12 verläuft, die Rastnuten 14 ausgebildet sind, und der kürzere L-Schenkel, der senkrecht zu den Seitenwandabschnitten 8 verläuft, eine Länge besitzt, die der Dicke der Raststege 12 entspricht, so dass die Raststege 12 an ihrer Außenseite bündig mit den Seitenwandabschnitten 8 an deren Außenseite abschließen.

Die Seitenwandabschnitte 8 besitzen an ihrer Innenseite Anlageflächen 17 für das Antriebsteil 1a, z. B. das Statorteil 3. Diese Anlageflächen 17 besitzen im Querschnitt zur Längsachse X-X des Gehäuses 1 gesehen eine Innenkontur, die der Außenkontur des Antriebsteils 1a, z. B. des Statorteils 3 derart angepasst ist, dass das Antriebsteil 1a, insbesondere der elektrische Motor 2, wie in Fig. 2 dargestellt, in Richtung der Gehäuselängsachse X-X in das offene Gehäusebasisteil 6 eingeschoben werden kann und in dieser Stellung zwischen den Anlageflächen 17 geführt ist. Vorteilhafterweise besitzt auch der Bodenabschnitt 7 eine entsprechend geformte Anlagefläche 17. Die Anlageflächen 17 an den Seitenwandabschnitten 8 sind einander diametral gegenüberliegend angeordnet. Hierbei sind die Anlageflächen 17 vorteilhafterweise derart ausgebildet und angeordnet, dass eine Mittelsenkrechte auf die Anlageflächen 17 durch den Mittelpunkt M des Antriebsteils 1a, insbesondere des Rotorteils 4 bzw. des elektrischen Motors 2 verläuft. Somit umschließen die Anlageflächen 17 das vom Antriebsteil 1a gebildete Gehäusevolumen, insbesondere im dargestellten Beispiel vom elektrischen Motor 2 gebildete Zylindervolumen mit einem Umschließungswinkel größer 180°, so dass das in das offene Gehäusebasisteil 6 eingeschobene Antriebsteil 1a innerhalb der Anlageflächen 17 geführt und gehalten ist. Der diametrale Abstand der insbesondere bogenförmigen Anlageflächen 17 ist im nicht aufgesteckten Zustand des Gehäusedeckels 11 größer als ein Außenmaß des Antriebsteils 1a, z. B. der Durchmesser des kreiszylindrischen Statorteils 3. Die Anlageflächen 17 der Seitenwandabschnitte 8 sind derart ausgebildet, dass sie zweckmäßigerweise an ihren Längsrändern Hinterschneidungen 18 aufweisen, so dass gegenüberliegende Randstege 19 ausgebildet sind. Im dargestellten Ausführungsbeispiel besitzen die Seitenwandansätze 15 unter Einschluss der Randstege 19 eine die Anlagefläche 17 bildende, z. B. kreisbogenförmige Kontur. Zweckmäßigerweise ist zwischen den Anlageflächen 17 des Gehäusebasisteils 6 und dem Statorteil 3 in Gehäuselängsrichtung X-X gesehen eine linienförmige Anlage im aufgesteckten Zustand des Gehäusedeckels 11 ausgebildet.

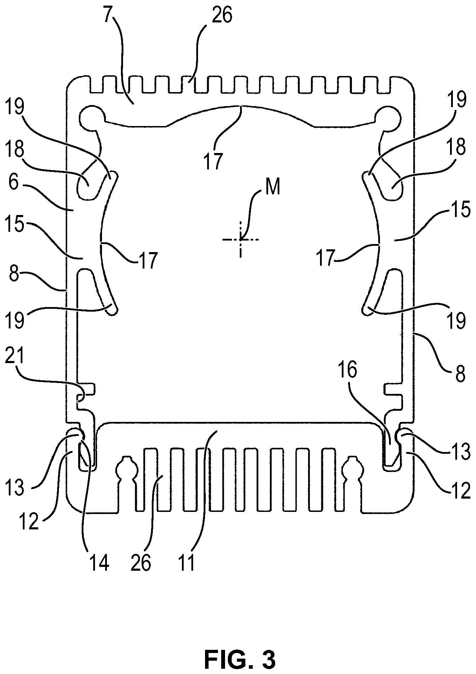

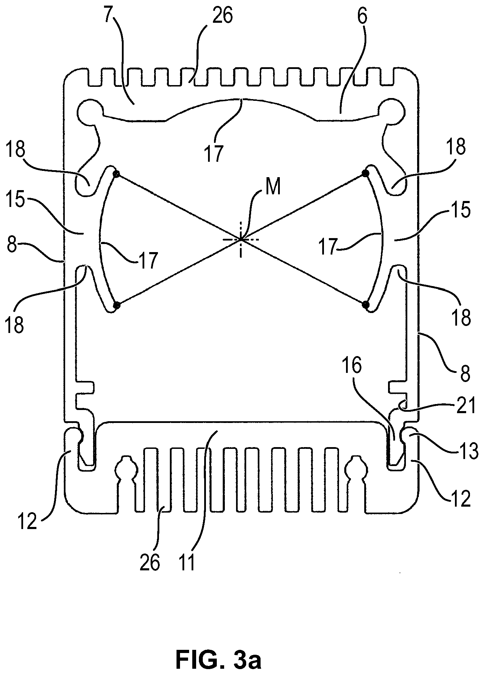

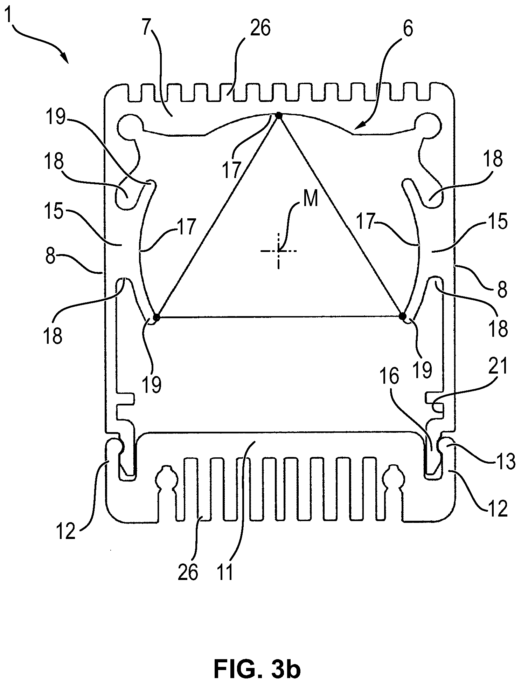

Wie in den Fig. 3a, 3b dargestellt ist, d. h. bei aufgestecktem Gehäusedeckel 11, ergibt sich im Querschnitt senkrecht zur Gehäuselängsachse X-X gesehen eine punktförmige Anlage zwischen dem Antriebsteil 1a und den Anlageflächen 17. Gemäß einer Ausgestaltung der Erfindung, siehe Fig. 3a, kann sich eine Vierpunkt-Anlage ergeben, wobei an jedem Seitenwandabschnitt 8 jeweils zwei Anlagepunkte vorhanden sind, die paarweise einander gegenüberliegen. Auf Grund der Formgebung der Randstege 19 liegen die jeweiligen Anlagepunkte unmittelbar an den freien Enden der Randstege 19, und es ergibt sich eine zentrische Anordnung des Antriebsteils 1a.

In Fig. 3b ist eine Dreipunkt-Anlage zwischen dem Antriebsteil 1a und den beiden Seitenwandabschnitten 8 und dem Bodenabschnitt 7 vorhanden. Hierbei liegen die Anlagepunkte an den Seitenwandabschnitten 8 an den dem Gehäusedeckel 11 zugekehrten Enden der Randstege 19, und der Anlagepunkt am Bodenabschnitt 7 liegt auf diesem mittig. Die Anlagepunkte bilden hierbei insbesondere die Eckpunkte eines gleichseitigen Dreiecks.

Indem erfindungsgemäß vorteilhafterweise der lichte Abstand der Seitenwandabschnitte 8 insbesondere im Bereich der Stegansätze 16 im nicht aufgesteckten Zustand des Gehäusedeckels 11 größer ist als der lichte Abstand nach dem Aufstecken des Gehäusedeckels 11 auf die Stegansätze 16 erfolgt eine Verbiegung der Seitenwandabschnitte 8 aufeinander zu, da durch die Aufsteckkraft die Seitenwandabschnitte 8 beim Aufstecken des Gehäusedeckels 11 aufeinander zu zusammengedrückt werden und somit der elektrische Motor 2 am Umfang seines Statorteils 3 kraftschlüssig über die Anlageflächen 17 im Gehäuse 1 fixiert wird. Hierbei rastet der Gehäusedeckel 11 mittels der Rastnocken 13 in die Rastnuten 14 ein. Weiterhin kann es erfindungsgemäß von Vorteil sein, wenn im Bereich der freien Enden der Seitenwandabschnitte 8 an deren Innenseiten jeweils einander gegenüberliegend in Längsrichtung der Gehäuselängsachse X-X verlaufende Aufnahmenuten 21 ausgebildet sind, in die eine Leiterplatte 22 eingeschoben ist. Diese Leiterplatte 22 wird zweckmäßigerweise in das Gehäusebasisteil 6 in Richtung der Gehäuselängsachse X-X vor dem Aufstecken des Gehäusedeckels 11 in Längsrichtung eingeführt. Dabei ist zweckmäßigerweise der Abstand der Aufnahmenuten 21 im Bereich ihrer Nutbodenfläche größer als die Breite der Leiterplatte 22, wenn der Gehäusedeckel 11 noch nicht aufgesteckt ist. Durch das Aufstecken des Gehäusedeckels 11 und der dadurch erreichten Verbiegung der Seitenwandabschnitte 8 in Richtung aufeinander zu, wird der Abstand der Bodenabschnitte der Aufnahmenuten 21 verkleinert, so dass dann die Leiterplatte 22 innerhalb der Aufnahmenuten 21 fixiert wird.

Durch die Ausbildung der Hinterschneidungen 18 im Bereich der Ansätze 15 wird die Dicke der Seitenwandabschnitte 8 reduziert und dadurch eine verbesserte Verbiegbarkeit bzw. Flexibilität der Seitenwandabschnitte 8 bewirkt. Zudem bewirkt die hierdurch erreichte Elastizität einen Toleranzausgleich für Fertigungstoleranzen zwischen dem Gehäusebasisteil 6 und dem eingesetzten Antriebsteil 1a.

Weiterhin kann es erfindungsgemäß vorteilhaft sein, wenn auf der Leiterplatte 22 auf ihrer dem Gehäusedeckel 11 zugekehrten Seite mindestens ein Halbleiterbaustein 23 befestigt ist, wobei der Gehäusedeckel 11 zweckmäßigerweise im aufgesteckten Zustand an dem Halbleiterbaustein 23 derart anliegt, dass ein Wärmeübergang zwischen diesem und dem Gehäusedeckel 11 stattfinden kann. Hierdurch wirkt der Gehäusedeckel 11 auch als Kühlkörper für den Halbleiterbaustein 23. Es kann weiterhin zweckmäßig sein, wenn auf der dem Gehäusedeckel 11 zugekehrten Seite des Halbleiterbausteins 23 eine Ausgleichbeschichtung 24 aus einem wärmeleitenden, elastischen Material aufgebracht ist. Diese Ausgleichbeschichtung 24 kann beispielsweise in Form eines Pads oder einer Paste ausgebildet sein. Diese Ausgleichbeschichtung 24 dient als Toleranzausgleich zwischen dem Gehäusedeckel 11 und dem Halbleiterbaustein 23.

Weiterhin kann es vorteilhaft sein, wenn der Gehäusedeckel 11 und insbesondere auch der Bodenabschnitt 7 an ihren Außenseiten Kühlrippen 26 aufweisen. Diese Kühlrippen 26 verbessern die Wärmeabfuhr von dem Halbleiterbaustein 23 über den Gehäusedeckel 11 nach außen, und ebenfalls verbessern sie die Wärmeabfuhr von dem Antriebsteil 1a, z. B. dem Statorteil 3 auf das Gehäuse 1 im Bereich des Bodenabschnitts 7. Zur weiteren Verbesserung der Wärmeabfuhr kann auf den Gehäusedeckel 11 ein zusätzlicher Axiallüfter montiert werden, der für eine erzwungene Konvektion entlang der Kühlrippen 26 sorgt.

Für einen axialen Abschluss des Gehäuses 1 kann zweckmäßigerweise an mindestens einer Stirnseite des Gehäuses 1, vorzugsweise an beiden Stirnseiten des Gehäuses 1, ein Abschlussdeckel 27 befestigt sein. Diese Abschlussdeckel 27 werden z. B. mittels Schrauben 31, die in das Gehäusebasisteil 6 und den Gehäusedeckel 11 eingeschraubt werden, befestigt. Durch einen der Abschlussdeckel 27 wird z. B. eine Antriebswelle 32 des Antriebsteils 1a, z. B. des Rotorteils 4 nach außen geführt, und zweckmäßigerweise an der gegenüberliegenden Seite werden durch den jeweiligen Abschlussdeckel 27 Anschlussstecker 33 nach außen geführt. Diese Anschlussstecker 33 sind vorzugsweise im Innern des Gehäuses 1 an Leiterplatten 28 befestigt, die senkrecht zur Leiterplatte 22 verlaufen.

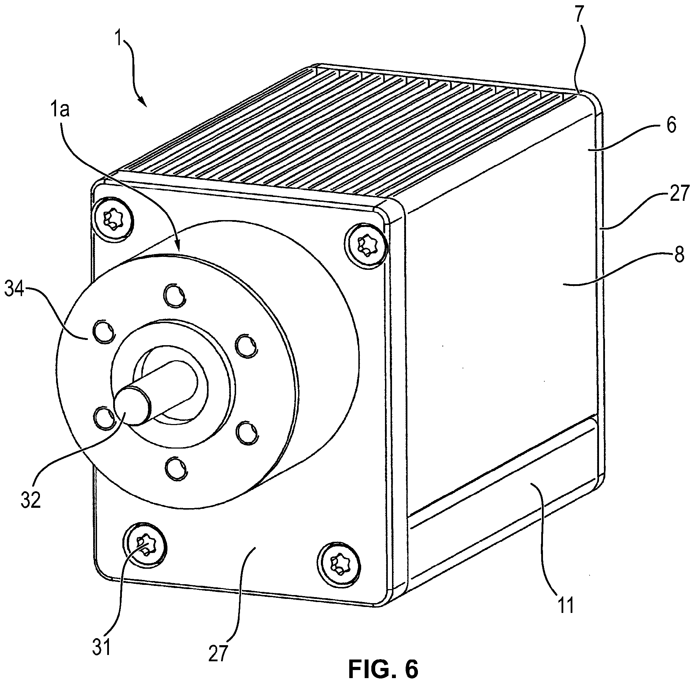

Durch die Verschraubung der Abschlussdeckel 27 am Gehäuse 1 werden einerseits das Gehäusebasisteil 6 und der Gehäusedeckel 11 verbunden und andererseits ein stabiles Gesamtgehäuse gebildet. Wird ein hoher IP-Schutzgrad gefordert, kann es weiterhin zweckmäßig sein, zusätzliche Dichtungen, insbesondere Flachdichtungen, zwischen dem Gehäusedeckel 11 und dem Gehäusebasisteil 6 vorzusehen sowie zusätzliche Dichtungen zwischen dem Gehäuse 1 und den Abschlussdeckeln 27. Weiterhin kann es ebenfalls erfindungsgemäß von Vorteil sein, wenn das Gehäuse 1 beispielsweise nicht nur zur Aufnahme des Antriebsteils 1a, z. B. eines elektrischen Motors dient, sondern auch zur Aufnahme eines mit diesem verbundenen Getriebebauteils 34. In diesem Fall kann es zweckmäßig sein, wenn - wie dies in Fig. 6 dargestellt ist - das Getriebebauteil 34 nicht vollständig in dem Gehäuse 1 aufgenommen ist, sondern durch einen der Abschlussdeckel 27 nach außen geführt ist. Es liegt ebenfalls im Rahmen der Erfindung, wenn die axiale Fixierung des elektrischen Motors 2 bei höheren mechanischen Belastungen durch eine zusätzliche Anflanschung an einen der Abschlussdeckel 27 vorgesehen ist. Zudem kann bei einer entsprechenden Baulänge des Antriebsteils 1a dieses sich durch einen Abschlussdeckel 27 nach außen erstrecken.

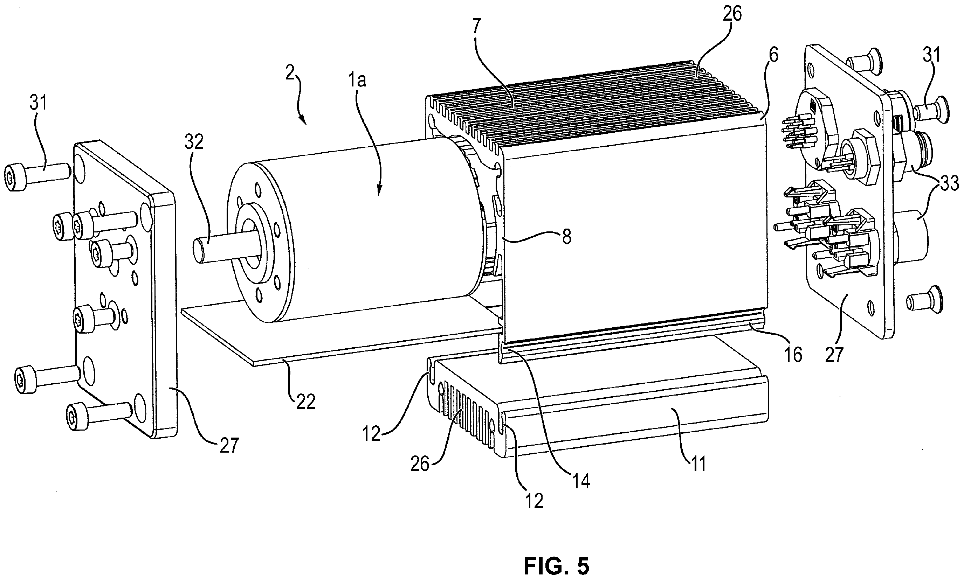

Wie in Fig. 5 dargestellt ist, erfolgt die Montage einer erfindungsgemäßen mechatronischen Antriebsvorrichtung derart, dass in das offene Gehäusebasisteil 6 das Antriebsteil 1a, z. B. der Motor 2 axial zwischen die Anlageflächen 17 eingeschoben wird. Danach erfolgt das axiale Einschieben der Leiterplatte 22 in die Aufnahmenuten 21. Nach dieser axialen Vormontage des Antriebsteils 1a und der Leiterplatte 22 in dem Gehäusebasisteil 6, wird senkrecht zur Längsrichtung des Gehäuses 1 der Gehäusedeckel 11 auf die freien Enden der Seitenwandabschnitte 8 aufgesteckt, wobei der Gehäusedeckel 11 mit seinen Raststegen 12 in die Rastnuten 14 einrastet. Durch das Aufstecken des Gehäusedeckels 11 auf die Seitenwandabschnitte 8 erfolgt eine Verbiegung der Seitenwandabschnitte 8 aufeinander zu, wodurch der Motor 2 und die Leiterplatte 22 innerhalb des Gehäusebasisteils 6 kraftschlüssig fixiert werden. Danach werden auf die Stirnseiten des Gehäuses 1 die Abschlussdeckel 27 mittels der Schrauben 31 befestigt und hierdurch das Gehäuse 1 vollständig verschlossen.

### Bezuqszeichenliste

- 1: Gehäuse
- 1a: Antriebsteil
- 2: Motor
- 3: Statorteil
- 4: Rotorteil
- 6: Gehäusebasisteil
- 7: Bodenabschnitt
- 8: Seitenwandabschnitte
- 9: Gehäuseöffnung
- 11: Gehäusedeckel
- 12: Raststege
- 13: Rastnocken
- 14: Rastnuten
- 15: Seitenwandansätze
- 16: Stegansätze
- 17: Anlageflächen
- 18: Hinterschneidungen
- 19: Randstege
- 21: Aufnahmenuten
- 22: Leiterplatte
- 23: Halbleiterbausteine
- 24: Ausgleichbeschichtung
- 26: Kühlrippen
- 27: Abschlussdeckel
- 28: Leiterplatten
- 31: Schrauben
- 32: Antriebswelle
- 33: Anschlussstecker
- 34: Getriebebauteil
- M: Mittelpunkt
- X-X: Gehäuselängsachse

## Patentansprüche

1. Mechatronische Antriebsvorrichtung umfassend ein Gehäuse (1) und ein in dem Gehäuse (1) angeordnetes Antriebsteil (1a), wobei das Antriebsteil (1a) im Gehäuse (1) umfangsgemäß durch gegenseitige Anlage kraftschlüssig gehalten ist, wobei das Gehäuse (1) aus einem Gehäusebasisteil (6) mit einem Bodenabschnitt (7) und zwei mit diesem jeweils an dessen Längsrändern angeformten, einander gegenüberliegenden Seitenwandabschnitten (8) und einer von den Seitenwandabschnitten (8) endseitig gebildeten Gehäuseöffnung (9) gebildet wird, wobei die Gehäuseöffnung (9) mittels eines Gehäusedeckels (11) verschlossen ist, der im aufgesetzten Zustand mit den Seitenwandabschnitten (8) kraftformschlüssig verbunden ist,
**dadurch gekennzeichnet, dass**
durch eine aufeinander zugerichtete Verbiegung der Seitenwandabschnitte (8) der Kraftschluss zwischen dem Antriebsteil (1a) und dem Gehäuse (1) vorhanden ist.

2. Mechatronische Antriebsvorrichtung nach Anspruch 1,
**dadurch gekennzeichnet, dass** das Gehäusebasisteil (6) im Querschnitt zu seiner Gehäuselängsachse (X-X) gesehen U-förmig ausgebildet ist, und die Seitenwandabschnitte (8) gleich hoch sind.

3. Mechatronische Antriebsvorrichtung nach Anspruch 1 oder 2,
**dadurch gekennzeichnet, dass** das Antriebsteil (1a) im Querschnitt zur Gehäuselängsachse (X-X) kreiszylindrisch oder polygonförmig ausgebildet ist.

4. Mechatronische Antriebsvorrichtung nach einem der Ansprüche 1 bis 3,
**dadurch gekennzeichnet, dass** der Gehäusedeckel (11) an seinen Längsrändern in Richtung auf den Bodenabschnitt (7) abstehende Raststege (12) mit endseitigen Rastnocken (13) aufweist, die im aufgesteckten Zustand des Gehäusedeckels (11) in an den Seitenwandabschnitten (8) an ihren freien Enden ausgebildeten Rastnuten (14) kraftformschlüssig einrasten.

5. Mechatronische Antriebsvorrichtung nach Anspruch 1 oder 4,
**dadurch gekennzeichnet, dass** der lichte Abstand der Seitenwandabschnitte (8) im nicht aufgesteckten Zustand des Gehäusedeckels (11) größer ist als der lichte Abstand nach dem Aufstecken des Gehäusedeckels (11) und größer als die Außenabmessungen z. B. der Durchmesser des Antriebsteils (1a).

6. Mechatronische Antriebsvorrichtung nach einem der Ansprüche 1 bis 5,
**dadurch gekennzeichnet, dass** an den Seitenwandabschnitten (8) Anlageflächen (17) für das Antriebsteil (1a) ausgebildet sind, die eine der Außenkontur des Antriebsteils (1a) angepasste Innenkontur aufweisen sowie die Anlageflächen (17) insbesondere diametral einander gegenüberliegen und eine derartige Bogenlänge besitzen, dass das Antriebsteil (1a) über einen Umschließungswinkel größer 180° umschlossen ist.

7. Mechatronische Antriebsvorrichtung nach Anspruch 6,
**dadurch gekennzeichnet, dass** auf dem Bodenabschnitt (7) eine zusätzliche Anlagefläche (17) für das Antriebsteil (1a) ausgebildet ist.

8. Mechatronische Antriebsvorrichtung nach Anspruch 6 oder 7,
**dadurch gekennzeichnet, dass** zwischen den Anlageflächen (17) der Seitenwandabschnitte (7) des Gehäuses (1) und dem Antriebsteil (1a) in Gehäuselängsrichtung (X-X) gesehen eine linienförmige Anlage ausgebildet ist.

9. Mechatronische Antriebsvorrichtung nach Anspruch 8,
**dadurch gekennzeichnet, dass** zwischen den Anlageflächen (17) der Seitenwandabschnitte (8) und dem Antriebsteil (1a) im aufgesteckten Zustand des Gehäusedeckels 11 im Querschnitt gesehen eine Vierpunkt-Anlage vorhanden ist, wobei jeweils an jedem Seitenwandabschnitt (8) zwei Anlagepunkte vorhanden sind, wobei eine zentrale Anordnung des Antriebsteils (1a) in der Gehäuselängsachse (X-X) gegeben ist.

10. Mechatronische Antriebsvorrichtung nach Anspruch 8,
**dadurch gekennzeichnet, dass** das Antriebsteil (1a) mit den Seitenwandabschnitten (8) und dem Bodenabschnitt (7) im Bereich ihrer Anlageflächen (17) im Querschnitt gesehen eine Dreipunkt-Anlage im aufgesteckten Zustand des Gehäusedeckels (11) aufweist.

11. Mechatronische Antriebsvorrichtung nach einem der Ansprüche 5 bis 10,
**dadurch gekennzeichnet, dass** die Anlageflächen (17) der Seitenwandabschnitte (8) Bestandteil von Seitenwandansätzen (15) sind, die an ihren Längsrändern Hinterschneidungen (18) aufweisen, so dass gegenüberliegende Randstege (19) ausgebildet sind.

12. Mechatronische Antriebsvorrichtung nach einem der Ansprüche 1 bis 11,
**dadurch gekennzeichnet, dass** im Bereich der freien Enden der Seitenwandabschnitte (8) an deren Innenseiten jeweils einander gegenüberliegend in Richtung der Gehäuselängsachse (X-X) verlaufende Aufnahmenuten (21) ausgebildet sind, in die eine Leiterplatte (22) eingeschoben ist.

13. Mechatronische Antriebsvorrichtung nach Anspruch 12,
**dadurch gekennzeichnet, dass** auf der Leiterplatte (22) auf ihrer dem Gehäusedeckel (11) zugekehrten Seite Halbleiterbausteine (23) angeordnet sind, und der Gehäusedeckel (11) mit seiner der Leiterplatte (22) zugekehrten Innenseite an den Halbleiterbausteinen (23) derart anliegt, dass ein Wärmeübergang stattfindet.

14. Mechatronische Antriebsvorrichtung nach Anspruch 13,
**dadurch gekennzeichnet, dass** auf der dem Gehäusedeckel (11) zugekehrten Seite der Halbleiterbausteine (23) elastische, wärmeleitende Ausgleichmittel (24) angeordnet sind.

15. Mechatronische Antriebsvorrichtung nach einem der Ansprüche 1 bis 14,
**dadurch gekennzeichnet, dass** der Gehäusedeckel (11) und/oder der Bodenabschnitt (7) jeweils auf ihrer Außenseite Kühlrippen (26) aufweisen.

16. Mechatronische Antriebsvorrichtung nach einem der Ansprüche 1 bis 15,
**dadurch gekennzeichnet, dass** das Gehäuse (1) an mindestens einer seiner Stirnseiten mittels eines Abschlussdeckels (27) verschlossen ist.

17. Mechatronische Antriebsvorrichtung nach Anspruch 16,
**dadurch gekennzeichnet, dass** der Gehäusedeckel (11) und der Abschlussdeckel (27) mit Dichtungselementen gegen das Gehäuse (1) abgedichtet sind.

18. Mechatronische Antriebsvorrichtung nach Anspruch 16 oder 17,
**dadurch gekennzeichnet, dass** durch einen der Abschlussdeckel (27) eine Antriebswelle (32) des Antriebsteils (1a) nach außen geführt ist, und insbesondere an der gegenüberliegenden Seite durch den Abschlussdeckel (27), z. B. Anschlussstecker (33) nach außen geführt sind, wobei diese Anschlussstecker (33) im Innern des Gehäuses (1) an Leiterplatten (28) befestigt sind, die senkrecht zur Leiterplatte (22) verlaufen.

19. Mechatronische Antriebsvorrichtung nach einem der Ansprüche 1 bis 18,
**dadurch gekennzeichnet, dass** mit dem Antriebsteil (1a) ein Getriebebauteil (34) verbunden ist, wobei das Getriebebauteil (34) mit einem Bauteilabschnitt durch einen der Abschlussdeckel (27) nach außen geführt ist.

20. Mechatronische Antriebsvorrichtung nach einem der Ansprüche 1 bis 18,
**dadurch gekennzeichnet, dass** das Antriebsteil (1a) durch einen der Abschlussdeckel (27) nach außen geführt ist.

21. Mechatronische Antriebsvorrichtung nach einem der Ansprüche 1 bis 20,
**dadurch gekennzeichnet, dass** die Antriebsvorrichtung aus einem elektrischen Motor (2) aus einem Statorteil (3) und einem in diesem drehbar gelagerten Rotorteil (4) gebildet ist, wobei das Statorteil (3) umfangsgemäß kraftschlüssig gehalten ist.

22. Mechatronische Antriebsvorrichtung nach einem der Ansprüche 1 bis 20,
**dadurch gekennzeichnet, dass** das Antriebsteil (1a) als Linearantrieb ausgebildet ist.

## Claims

1. Mechatronic drive apparatus comprising a housing (1) and a drive part (1a) which is arranged in the housing (1), wherein the drive part (1a) is circumferentially held in a force-fitting manner in the housing (1) by mutual contact, wherein the housing (1) is formed from a housing base part (6) with a base section (7) and two mutually opposite side wall sections (8) which are each integrally formed with said base section at the longitudinal edges thereof in each case and a housing opening (9) which is formed at the end side by the side wall sections (8), wherein the housing opening (9) is closed by means of a housing cover (11) which is connected in a force-fitting and form-fitting manner to the side wall sections (8) in the mounted state, **characterized in that** the force-fitting connection between the drive part (1a) and the housing (1) is provided by bending of the side wall sections (8), the said bending operations being directed towards one another.

2. Mechatronic drive apparatus according to Claim 1, **characterized in that** the housing base part (6) is of U-shaped design in cross section as seen in the direction of its housing longitudinal axis (X-X), and the side wall sections (8) are of equal height.

3. Mechatronic drive apparatus according to Claim 1 or 2, **characterized in that** the drive part (1a) is of circular-cylindrical or polygonal design in cross section in the direction of the housing longitudinal axis (X-X).

4. Mechatronic drive apparatus according to one of Claims 1 to 3, **characterized in that** the housing cover (11) has, at its longitudinal edges, latching webs (12) which protrude in the direction of the base section (7) and have end-side latching cams (13) which, in the state in which the housing cover (11) is fitted, latch in a force-fitting and form-fitting manner into the latching grooves (14) which are formed on the side wall sections (8) at the free ends thereof.

5. Mechatronic drive apparatus according to Claim 1 or 4, **characterized in that** the clear distance between the side wall sections (8) in the state in which the housing cover (11) is not fitted is greater than the clear distance after the housing cover (11) has been fitted and greater than the external dimensions, for example the diameter of the drive part (1a).

6. Mechatronic drive apparatus according to one of Claims 1 to 5, **characterized in that** contact surfaces (17) for the drive part (1a) are formed on the side wall sections (8) and have an internal contour which is matched to the external contour of the drive part (1a) and also the contact surfaces (17) are situated, in particular diametrically, opposite one another and have an arc length such that the drive part (1a) is enclosed over an angle of enclosure of greater than 180°.

7. Mechatronic drive apparatus according to Claim 6, **characterized in that** an additional contact surface (17) for the drive part (1a) is formed on the base section (7) .

8. Mechatronic drive apparatus according to Claim 6 or 7, **characterized in that** linear contact is formed between the contact surfaces (17) of the side wall sections (7) of the housing (1) and the drive part (1a) as seen in the housing longitudinal direction (X-X).

9. Mechatronic drive apparatus according to Claim 8, **characterized in that** four-point contact is provided between the contact surfaces (17) of the side wall sections (8) and the drive part (1a) in the state in which the housing cover (11) is fitted as seen in cross section, wherein in each case two contact points are provided on each side wall section (8), wherein the drive part (1a) is arranged centrally in the housing longitudinal axis (X-X).

10. Mechatronic drive apparatus according to Claim 8, **characterized in that** the drive part (1a) exhibits three-point contact with the side wall sections (8) and the base section (7) in the region of the contact surfaces (17) thereof as seen in cross section in the state in which the housing cover (11) is fitted.

11. Mechatronic drive apparatus according to one of Claims 5 to 10, **characterized in that** the contact surfaces (17) of the side wall sections (8) are constituent parts of side wall attachments (15) which have undercuts (18) at the longitudinal edges thereof, so that opposite edge webs (19) are formed.

12. Mechatronic drive apparatus according to one of Claims 1 to 11, **characterized in that** receiving grooves (21) which run opposite one another in the direction of the housing longitudinal axis (X-X) and into which a printed circuit board (22) is inserted are formed in the region of the free ends of the side wall sections (8) on the inner sides thereof.

13. Mechatronic drive apparatus according to Claim 12, **characterized in that** semiconductor modules (23) are arranged on the printed circuit board (22) on that side of the said printed circuit board which faces the housing cover (11), and the housing cover (11) bears against the semiconductor modules (23) by way of its inner face which faces the printed circuit board (22) in such a way that heat transfer takes place.

14. Mechatronic drive apparatus according to Claim 13, **characterized in that** elastic, thermally conductive compensation means (24) are arranged on that side of the semiconductor modules (23) which faces the housing cover (11).

15. Mechatronic drive apparatus according to one of Claims 1 to 14, **characterized in that** the housing cover (11) and/or the base section (7) each have cooling ribs (26) on the outer face thereof.

16. Mechatronic drive apparatus according to one of Claims 1 to 15, **characterized in that** the housing (1) is closed by means of a closure cover (27) at at least one of its end sides.

17. Mechatronic drive apparatus according to Claim 16, **characterized in that** the housing cover (11) and the closure cover (27) are sealed off from the housing (1) by way of sealing elements.

18. Mechatronic drive apparatus according to Claim 16 or 17, **characterized in that** a drive shaft (32) of the drive part (1a) is routed to the outside through one of the closure covers (27), and, for example, connection plugs (33) are routed to the outside through the closure cover (27) in particular on the opposite side, wherein these connection plugs (33) are fastened to printed circuit boards (28), which run perpendicular to the printed circuit board (22), in the interior of the housing (1).

19. Mechatronic drive apparatus according to one of Claims 1 to 18, **characterized in that** a transmission component (34) is connected to the drive part (1a), wherein the transmission component (34) is routed to the outside with a component section through one of the closure covers (27.

20. Mechatronic drive apparatus according to one of Claims 1 to 18, **characterized in that** the drive part (1a) is routed to the outside through one of the closure covers (27) .

21. Mechatronic drive apparatus according to one of Claims 1 to 20, **characterized in that** the drive apparatus is formed from an electric motor (2) comprising a stator part (3) and a rotor part (4) which is rotatably mounted in the said stator part, wherein the stator part (3) is circumferentially held in a force-fitting manner.

22. Mechatronic drive apparatus according to one of Claims 1 to 20, **characterized in that** the drive part (1a) is designed as a linear drive.

## Revendications

1. Dispositif d'entraînement mécatronique, comprenant un carter (1) et une partie d'entraînement (1a) disposée dans le carter (1), la partie d'entraînement (1a) étant retenue dans le carter (1) de façon circonférentielle par liaison de force par un appui mutuel,
le carter (1) étant formé d'une partie de base de carter (6) avec un tronçon de fond (7) et deux tronçons de paroi latérale (8) opposés formés avec le tronçon de fond respectivement sur ses bords latéraux, et d'une ouverture de carter (9) formée, côté extrémité, des tronçons de paroi latérale (8), l'ouverture de carter (9) étant fermée au moyen d'un couvercle de carter (11) qui, dans l'état posé, est raccordé par liaison de forme et de force aux tronçons de paroi latérale (8), **caractérisé en ce que** la liaison de force est présente entre la partie d'entraînement (1a) et le carter (1) du fait d'une flexion, dirigée l'un vers l'autre, des tronçons de paroi latérale (8).

2. Dispositif d'entraînement mécatronique selon la revendication 1,
**caractérisé en ce que**, vue en coupe transversale par rapport à son axe longitudinal de carter (X-X), la partie de base de carter (6) est constituée en forme de U, et les tronçons de paroi latérale (8) sont de hauteur égale.

3. Dispositif d'entraînement mécatronique selon la revendication 1 ou 2,
**caractérisé en ce que**, en coupe transversale par rapport à l'axe longitudinal de carter (X-X), la partie d'entraînement (1a) est constituée sous forme cylindrique circulaire ou polygonale.

4. Dispositif d'entraînement mécatronique selon l'une des revendications 1 à 3,
**caractérisé en ce que**, sur ses bords longitudinaux, le couvercle de carter (11) présente des nervures d'encliquetage (12) qui dépassent en direction du tronçon de fond (7), avec des cames d'encliquetage (13) qui, dans l'état enfiché du couvercle de carter (11), s'enclenchent par liaison de force et de forme dans des rainures d'encliquetage (14) constituées sur les tronçons de paroi latérale (8) à leurs extrémités libres.

5. Dispositif d'entraînement mécatronique selon la revendication 1 ou 4,
**caractérisé en ce que** l'intervalle libre des tronçons de paroi latérale (8) dans l'état non enfiché du couvercle de carter (11) est plus grand que l'intervalle libre après l'enfichage du couvercle de carter (11) et plus grand que les dimensions extérieures, par exemple le diamètre de la partie d'entraînement (1a).

6. Dispositif d'entraînement mécatronique selon l'une des revendications 1 à 5,
**caractérisé en ce que**, sur les tronçons de paroi latérale (8), il est constitué des surfaces d'appui (17) pour la partie d'entraînement (1a) qui présentent un contour intérieur adapté au contour extérieur de la partie d'entraînement (1a) de même que les surfaces d'appui (17) sont en particulier placées de façon diamétralement opposée les unes par rapport aux autres et possèdent une longueur d'arc telle que la partie d'entraînement (1a) est enveloppée sur un angle d'enveloppement supérieur à 180°.

7. Dispositif d'entraînement mécatronique selon la revendication 6,
**caractérisé en ce qu'**une surface d'appui (17) supplémentaire est constituée sur le tronçon de fond (7) pour la partie d'entraînement (1a).

8. Dispositif d'entraînement mécatronique selon la revendication 6 ou 7,
**caractérisé en ce qu'**un appui de forme linéaire est constitué entre les surfaces d'appui (17) des tronçons de paroi latérale (7) du boîtier (1) et la partie d'entraînement (1a), vu dans la direction longitudinale de carter (X-X).

9. Dispositif d'entraînement mécatronique selon la revendication 8,
**caractérisé en ce qu'**il existe un appui à quatre points entre les surfaces d'appui (17) des tronçons de paroi latérale (8) et la partie d'entraînement (1a) dans l'état enfiché du couvercle de carter (11), vu en section transversale, deux points d'appui étant présents respectivement sur chaque tronçon de paroi latérale (8), une disposition centrale de la partie d'entraînement (1a) dans l'axe longitudinal de carter (X-X) étant donnée.

10. Dispositif d'entraînement mécatronique selon la revendication 8,
**caractérisé en ce que** la partie d'entraînement (1a) avec les tronçons de paroi latérale (8) et le tronçon de fond (7) présente, dans la zone de leurs surfaces d'appui (17), vu en section transversale, un appui à trois points dans l'état enfiché du couvercle de boîtier (11).

11. Dispositif d'entraînement mécatronique selon l'une des revendications 5 à 10,
**caractérisé en ce que** les surfaces d'appui (17) des tronçons de paroi latérale (8) font partie d'embouts de paroi latérale (15) qui présentent des contre-dépouilles (18) sur leurs bords longitudinaux de telle sorte que des nervures de bord (19) opposées sont constituées.

12. Dispositif d'entraînement mécatronique selon l'une des revendications 1 à 11,
**caractérisé en ce que**, dans la zone des extrémités libres des tronçons de paroi latérale (8), sur leurs côtés intérieurs, il est constitué des rainures de réception (21), placées de façon respectivement opposée en direction de l'axe longitudinal de carter (X-X), dans lesquels une carte de circuit imprimé (22)est insérée.

13. Dispositif d'entraînement mécatronique selon la revendication 12,
**caractérisé en ce que** des modules à semi-conducteurs (23) sont disposés sur la carte de circuit imprimé (22), sur son côté tourné vers le couvercle de carter (11), et le couvercle de carter (11), avec son côté intérieur tourné vers la carte de circuit imprimé (22), est adjacent aux modules à semi-conducteurs (23) de telle sorte qu'il se produit un transfert de chaleur.

14. Dispositif d'entraînement mécatronique selon la revendication 13,
**caractérisé en ce que** des moyens d'équilibrage (24) thermiquement conducteurs et élastiques sont disposés sur le côté des modules à semi-conducteurs (23) tourné vers le couvercle de carter (11).

15. Dispositif d'entraînement mécatronique selon l'une des revendications 1 à 14,
**caractérisé en ce que** le couvercle de carter (11) et/ou le tronçon de fond (7) présentent respectivement des ailettes de refroidissement (26) sur leur côté extérieur.

16. Dispositif d'entraînement mécatronique selon l'une des revendications 1 à 15,
**caractérisé en ce que** le carter (1) est fermé au moyen d'un couvercle de fermeture (27) sur au moins un de ses côtés frontaux.

17. Dispositif d'entraînement mécatronique selon la revendication 16,
**caractérisé en ce que** le couvercle de carter (11) et le couvercle de fermeture (27) sont rendus étanches vis-à-vis du carter (1) avec des éléments d'étanchéité.

18. Dispositif d'entraînement mécatronique selon la revendication 16 ou 17,
**caractérisé en ce qu'**un arbre d'entraînement (32) de la partie d'entraînement (1a) est guidé vers l'extérieur à travers un des couvercles de fermeture (27), et en particulier des connecteurs (33) par exemple sont guidés vers l'extérieur sur le côté opposé à travers le couvercle de fermeture (27), ces connecteurs (33) étant fixés à l'intérieur du boîtier (1) sur des cartes de circuit imprimé (28) qui sont perpendiculaires à la carte de circuit imprimé (22).

19. Dispositif d'entraînement mécatronique selon l'une des revendications 1 à 18,
**caractérisé en ce qu'**un composant de transmission (34) est raccordé à la partie d'entraînement (1a), le composant de transmission (34) avec un tronçon de composant étant guidé vers l'extérieur à travers un des couvercles de fermeture (27).

20. Dispositif d'entraînement mécatronique selon l'une des revendications 1 à 18,
**caractérisé en ce que** la partie d'entraînement (1a) est guidée vers l'extérieur à travers un des couvercles de fermeture (27).

21. Dispositif d'entraînement mécatronique selon l'une des revendications 1 à 20,
**caractérisé en ce que** le dispositif d'entraînement est formé d'un moteur (2) électrique, d'une partie de stator (3) et d'une partie de rotor (4) supportée en rotation dans celle-ci, la partie de stator (3) étant retenue de façon circonférentielle par liaison de force.

22. Dispositif d'entraînement mécatronique selon l'une des revendications 1 à 20,
**caractérisé en ce que** la partie d'entraînement (1a) est constituée en tant qu'entraînement linéaire.
